# DEMANDE DE BREVET EUROPEEN

(11) **EP 3 340 332 A1**
(43) Date de publication de la demande: **27.06.2018**
(21) Numéro de dépôt: 16206781.3
(22) Date de dépôt: 23.12.2016
(51) Int. Cl.: H01M 2/02, H01M 2/08

(54) **PILE ET SON PROCEDE DE FABRICATION**

(71) Demandeur: The Swatch Group Research and Development Ltd, 2074 Marin (CH)
(72) Inventeur: Vuille, Pierry, 2338 Les Emibois (CH)
(74) Mandataire: Surmely, Gérard

(57) **Abrégé**

La présente invention se rapporte à un procédé de fabrication d'une pile, en particulier d'une pile bouton, comportant deux parties (3,4) définissant respectivement les deux pôles de la pile. Elle se caractérise par le fait que deux surfaces respectives des deux parties (3,4), disposées l'une en regard de l'autre, sont assemblées avec une couche de colle isolante (2) ayant une épaisseur maîtrisée au moyen d'un espaceur (1) en matériau isolant. Cet espaceur est formé par exemple de particules en céramique. Il peut aussi être formé d'un treillis incorporé dans la colle isolante. Dans un autre mode de réalisation, l'espaceur peut être formé par des plots déposés, préalablement au collage, sur une des deux surfaces à coller.

## Description

### OBJET DE L'INVENTION

La présente invention se rapporte à un procédé de fabrication de piles et en particulier de piles boutons. Elle se rapporte également à la pile issue du procédé de fabrication susmentionné.

### ARRIÈRE-PLAN TECHNOLOGIQUE

Les piles boutons comportent généralement un boîtier muni d'un récipient et d'un couvercle formant respectivement les pôles positif et négatif de la pile. De manière conventionnelle, les deux parties sont assemblées via un joint préformé en polymère garantissant l'étanchéité de la pile et assurant la fonction d'isolation galvanique entre les deux pôles. Une telle construction est montrée, par exemple, dans le document GB 1 566 061.

Cet assemblage avec joint présente comme désavantage d'occuper un espace non négligeable qui va restreindre le volume actif de la pile contenant l'électrolyte. De plus, il nécessite une étape de pliage de la partie supérieure du récipient contre le couvercle pour comprimer le joint polymère et assurer la fermeture ainsi que l'étanchéité de la pile bouton.

Pour remédier à ces inconvénients, une solution consiste à assembler le récipient et le couvercle par collage sans apport de joint préformé. Cependant, dans le cas particulier d'une application pour piles, le procédé d'assemblage du boîtier de pile doit répondre à plusieurs critères qu'on peut lister comme suit :
- Garantir une épaisseur minimale de la couche de colle qui soit suffisante pour assurer le non contact des pôles et ainsi une bonne isolation galvanique ;
- Garantir une épaisseur homogène de la couche de colle pour assurer une résistance constante du collage ;
- Garantir cette épaisseur minimale et homogène de la couche de colle indépendamment de sa consistance, qu'elle soit plutôt visqueuse ou fluide ;
- Assurer la reproductibilité du procédé pour garantir les cotes de l'assemblage final d'une pile à l'autre.

A ce jour, il est difficile de mettre en oeuvre un procédé de fabrication de piles avec un joint colle d'épaisseur contrôlée qui soit simple, compatible avec une cadence élevée et une production de masse et donc au final peu onéreux.

### RÉSUMÉ DE L'INVENTION

La présente invention propose un nouveau procédé de fabrication d'une pile permettant de maîtriser l'épaisseur d'un joint colle reliant les deux pôles afin d'assurer les fonctions d'isolation galvanique, de résistance et d'étanchéité entre les deux parties formant respectivement les deux pôles. L'invention concerne aussi une pile, en particulier une pile bouton résultant du procédé de fabrication.

A cette fin, un procédé de fabrication ainsi qu'une pile selon les revendications annexées sont proposés.

### BRÈVE DESCRIPTION DES FIGURES

Les caractéristiques et avantages de la présente invention apparaîtront à la lecture de la description détaillée ci-dessous faisant référence aux figures suivantes :
- Les figures 1a, 1b représentent schématiquement les étapes mises en oeuvre lors de l'assemblage des deux parties du boîtier de pile selon une première variante de l'invention.
- Les figures 2a, 2b, 2c représentent schématiquement les étapes mises en oeuvre lors de l'assemblage selon une seconde variante de l'invention.
- La figure 3 est une vue en demi-coupe d'un agencement de la zone jointive entre le récipient et le couvercle du boîtier de pile après assemblage conformément à la présente invention. La figure 3a est un agrandissement de la zone jointive. Les figures 4 et 4a représentent une variante de l'agencement selon les figures 3 et 3a.

### Légende

(1) Espaceur
(2) Couche de colle
(3) Première partie du boîtier, en particulier couvercle, définissant un pôle
(4) Seconde partie du boîtier, en particulier récipient, définissant l'autre pôle
(5) Jonction collée
(6) Boîtier
(7) Joint polymère

### DESCRIPTION DÉTAILLÉE DE L'INVENTION

La présente invention se rapporte à un procédé de fabrication d'une pile comportant un boîtier muni classiquement de deux parties définissant ses pôles. Il peut s'agir d'une pile bouton mais la présente invention est d'application pour d'autres types de piles tels que des batteries sachets, des batteries à couches minces, et plus généralement tous types de batteries assemblées dans l'art antérieur par un sertissage comprimant un joint polymère préformé. La présente invention se rapporte également à la pile issue de ce procédé de fabrication.

Selon l'invention, la jonction entre deux surfaces de ces parties est assurée grâce à une couche de colle isolante comprenant un espaceur destiné à maintenir les surfaces collées à une distance donnée sensiblement constante. On entend ici par espaceur aussi bien un ensemble d'éléments répartis dans la jonction, tels que des particules, qu'une structure continue telle qu'un treillis incorporé dans la couche de colle.

Selon l'invention, cet espaceur présente une série de caractéristiques qui le rende apte à être utilisé dans une pile sans altérer la résistance de la jonction, l'étanchéité du boîtier ou encore l'isolation galvanique de la pile.

Ainsi, l'espaceur est réalisé dans un matériau électriquement isolant, chimiquement stable et compatible avec le type de colle choisie. On veillera aussi avantageusement à la compatibilité avec l'électrolyte présent dans la pile. De préférence, le matériau présente également une densité proche de celle de la colle afin d'éviter un phénomène de sédimentation ou de flottaison dans le cas d'un espaceur se présentant sous forme de particules. Le matériau doit en outre être résistant à la compression pour permettre un collage en force, c.à.d. sous pression, sensiblement sans déformation de l'espaceur. En conséquence, le matériau de l'espaceur est préférentiellement choisi parmi les verres, les céramiques (carbures, nitrures, oxydes) et le diamant, mais aussi parmi les polymères et les composites à matrice organique. Plus particulièrement, on peut citer l'alumine comme choix de céramique et le téflon, le PEEK, le PET et le nylon comme choix de polymères. Pour améliorer la mouillabilité de l'espaceur au sein de la colle, il est en outre envisageable de réaliser un traitement de surface de cet espaceur.

L'espaceur peut revêtir différentes formes. Il peut se présenter sous forme de particules, notamment de billes, sous forme d'une structure du type tissu ou treillis, ou encore sous forme de plots déposés sur une des surfaces à coller. La taille de l'espaceur est choisie en fonction de l'épaisseur de la couche de colle souhaitée après polymérisation. Pour assurer le non contact entre les pôles assemblés afin d'obtenir une isolation galvanique, la couche de colle doit avoir une épaisseur de minimum 30 µm, de préférence sensiblement 50 µm. De préférence, elle n'excède pas 200 µm afin de réaliser un joint d'épaisseur limitée. Dans le cas de plots déposés, leur épaisseur est donc de minimum 30 µm comme dans le cas de particules. Ces dernières ont préférentiellement un diamètre moyen d50 compris entre 30 µm et 200 µm avec une variation autour de cette taille moyenne comprise, de préférence, entre 10% et 25%.

Toujours préférentiellement, les particules ne sont pas des billes parfaitement sphériques mais présentent des arêtes et surface anguleuses qui sont autant de sites d'accrochage lors du collage. De plus, une certaine rugosité en surface est avantageuse. Ces formes anguleuses empêchent également un déplacement relatif des parties à assembler par roulage des billes ou particules lors de l'application d'une pression durant la phase de polymérisation.

La densité de particules formant l'espaceur et leur répartition sont déterminés pour obtenir une épaisseur sensiblement constante sur la longueur de la jonction. Dans le cas d'un ensemble d'éléments tels que des billes ou des plots, ils sont avantageusement répartis sur la longueur du joint collé avec une densité comprise entre 1 et 20 par mm² et, de préférence, entre 5 et 10 par mm². Dans le cas d'une structure continue type tissu, elle s'étend sensiblement sur toute la longueur de la jonction et avantageusement sur la majeure partie de sa largeur. Dans ce dernier cas, on choisira un tissu qui est bien mouillé par la colle pour former une interface imperméable avec la colle. En particulier, on veillera à ce que les fibres ne forment pas de fibrilles pouvant jouer le rôle de mèches et donc de chemin pour l'électrolyte.

Concernant la colle, il s'agit de préférence d'une colle époxy ou d'une colle acrylate. D'autres types de colle peuvent être envisagés, par exemple des colles silicone ou polyuéthane.

Selon l'invention, il y a plusieurs moyens d'incorporer l'espaceur dans la couche de colle formant la jonction isolante lors de l'assemblage des deux parties du boîtier à coller. Le type d'espaceur sera choisi en conséquence.

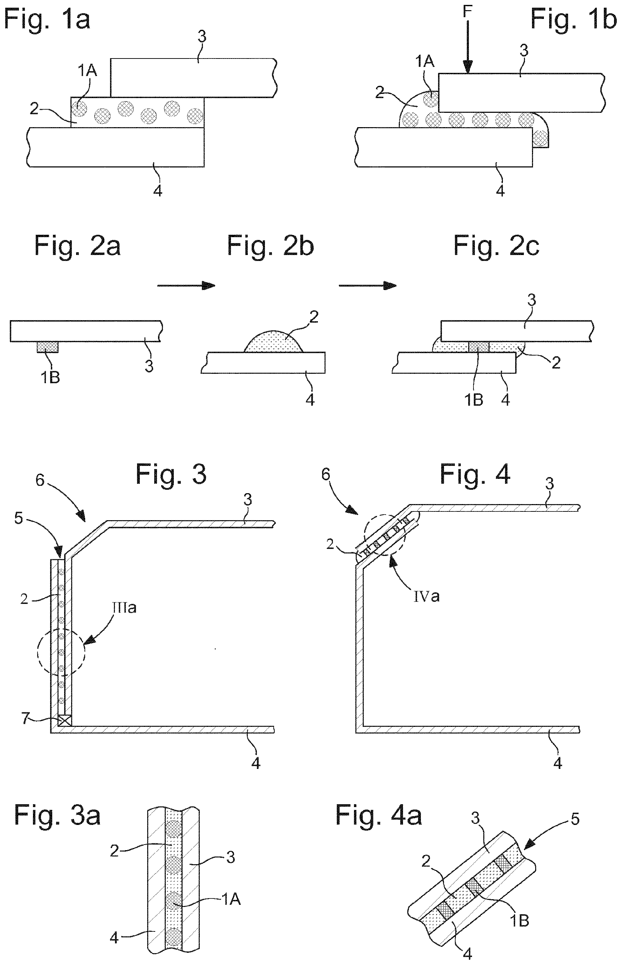

Selon une variante schématiquement représentée aux figures 1a et 1b, l'espaceur 1 est intégré à la colle 2 avant dépose. Dans cette configuration, l'espaceur peut se présenter sous forme de particules dispersées au sein de la colle. Il est, par exemple, possible d'utiliser des billes de verre dispersées au sein d'un film de colle ou d'une colle plus liquide et, ce, de manière bien connue de l'homme de métier. L'espaceur peut également se présenter sous forme d'une structure fibreuse pré-imprégnée de colle (non représenté). Lors du fluage de la colle, sous les effets de la pression de collage ou de la température de polymérisation, l'espaceur fait office de butée de montage entre les deux parties 3 et 4 comme montré séquentiellement aux figures 1a et 1b. Cela garantit la précision et la répétabilité de l'assemblage.

Selon une autre variante représentée aux figures 2a, 2b et 2c, les étapes de dépose de la colle et de l'espaceur sont distinctes. L'espaceur 1 est déposé sur une des deux surfaces à coller (fig.2a) ou sur les deux surfaces. Dans cette configuration, l'espaceur peut se présenter sous forme de plots déposé par un procédé d'impression, notamment par sérigraphie, par sprayage ou par tampographie. Ensuite, la couche de colle 2 est déposée sur la surface d'une des parties 3 ou 4 (fig.2b). Les plots déposés permettent, après solidification, de réaliser une butée lors de l'assemblage des deux parties 3,4 de la pile (fig.2c). L'espaceur peut également se présenter sous forme d'une structure ou de particules déposées sur une des surfaces éventuellement déjà couverte d'un film de colle. Il est également envisageable de prendre en sandwich la structure ou les particules entre deux films de colle. La structure est déposée ou les particules sont saupoudrées sur un premier film de colle avant de déposer un second film de colle permettant un enrobage parfait de l'espaceur.

La jonction isolante entre les deux parties du boîtier de pile peut être réalisée à différents endroits de ce boîtier. A titre d'exemples non limitatifs, les figures 3, 3a et 4, 4a présentent différents agencements de la jonction collée entre les deux parties. A la figure 3, la jonction collée 5 entre le couvercle 3 et le récipient 4 se positionne sur le pourtour cylindrique du boîtier 6 avec au pied du couvercle 3 un joint polymère 7 isolant le couvercle du récipient. Dans une variante préférée montrée à la figure 4, la jonction collée 5 entre le couvercle 3 et le récipient 4 se positionne dans une zone tronconique du boîtier 6 située dans sa partie supérieure.

Le boîtier de pile ainsi réalisé présente pour avantage d'avoir un volume actif optimisé, par rapport à un boîtier conventionnel ayant un joint polymère préformé, tout en étant étanche et en présentant une bonne isolation galvanique.

## Revendications

1. Procédé de fabrication d'une pile, en particulier d'une pile bouton, comportant deux parties (3,4) définissant respectivement les pôles de la pile, ces deux parties étant assemblées au moyen d'une couche de colle (2) agencée entre deux surfaces respectives des deux parties disposées l'une en regard de l'autre, ce procédé de fabrication étant **caractérisé en ce que** ladite couche de colle a une épaisseur maîtrisée au moyen d'un espaceur (1) en matériau électriquement isolant, cette couche de colle formant après polymérisation un joint électriquement isolant entre les deux parties.

2. Procédé selon la revendication 1, **caractérisé en ce que** l'espaceur (1) est intégré à la colle avant assemblage des deux parties.

3. Procédé selon la revendication 1, **caractérisé en ce que** l'espaceur (1) et la couche de colle (2) sont déposés séparément lors de l'assemblage.

4. Procédé selon l'une quelconque des revendications précédentes, **caractérisé en ce que** l'espaceur (1) se présente sous forme de particules.

5. Procédé selon l'une quelconque des revendications 1 à 3, **caractérisé en ce que** l'espaceur (1) est formé par une structure telle qu'un treillis ou un tissu.

6. Procédé selon l'une quelconque des revendications précédentes, **caractérisé en ce que** l'espaceur (1) est, lors de l'assemblage, pris en sandwich entre deux films de colle formant après polymérisation ladite couche de colle (2).

7. Procédé la revendication 1 ou 3, **caractérisé en ce que** l'espaceur (1) se présente sous forme de plots.

8. Procédé selon la revendication 7, dans lequel les plots sont déposés, avant l'assemblage des deux parties, sur l'une ou les deux surfaces à coller par un procédé d'impression, notamment par tampographie, par sérigraphie ou par sprayage.

9. Procédé selon l'une des revendications 4, 7 et 8, **caractérisé en ce que** la densité des plots ou des particules est comprise entre 1 et 20 particules / plots par mm² et préférentiellement entre 5 et 10 particules / plots par mm² des surfaces à assembler.

10. Procédé selon l'une quelconque des revendications précédentes, **caractérisé en ce que** l'espaceur (1) a une épaisseur ou un diamètre moyen (d50) de minimum 30 µm.

11. Procédé selon l'une quelconque des revendications précédentes, dans lequel l'espaceur (1) est réalisé dans un matériau choisi parmi les verres, les céramiques, le diamant et des composites à matrice polymère.

12. Pile, en particulier pile bouton, comprenant un boîtier (6) constitué d'au moins deux parties (3,4) définissant respectivement les pôles de la pile, **caractérisée en ce que** le boîtier (6) comporte une zone jointive (5) entre les deux parties (3,4) définissant un joint isolant, cette zone jointive étant formée d'une couche de colle (2) dans laquelle est incorporé un espaceur (1).

13. Pile selon la revendication 12, dans laquelle les deux parties (3,4) forment respectivement un couvercle et un récipient du boîtier (6).

14. Pile selon la revendication 12 ou 13, dans laquelle la zone jointive (5) est située dans une portion cylindrique du boîtier (6).

15. Pile selon la revendication 12 ou 13, **caractérisée en ce que** la zone jointive (5) est située dans une portion tronconique formant une partie supérieure du boîtier (6).

16. Pile selon l'une quelconque des revendications 12 à 15, **caractérisée en ce que** ladite couche de colle (2) comprenant l'espaceur (1) a une épaisseur sensiblement constante comprise entre 30 µm et 200 µm, de préférence entre 50 µm et 200 µm.
